## Europäisches Patentamt

(19) **European Patent Office**

**Office européen des brevets**

(11) Numéro de publication: **0 253 721**
**B1**

(12) **FASCICULE DE BREVET EUROPEEN**

(45) Date de publication du fascicule du brevet:
21.03.90

(51) Int. Cl.⁴: **B29C 61/06**

(21) Numéro de dépôt: **87401617.3**

(22) Date de dépôt: **09.07.87**

(54) **Manchon thermorétractable comportant des moyens pour contrôler son chauffage uniforme, et procédé de fabrication de ce manchon.**

(30) Priorité: **10.07.86 FR 8610057**

(43) Date de publication de la demande:
**20.01.88 Bulletin 88/3**

(45) Mention de la délivrance du brevet:
**21.03.90 Bulletin 90/12**

(84) Etats contractants désignés:
**DE ES GB IT SE**

(56) Documents cités:
**EP-A- 0 082 022**
**EP-A- 0 121 733**
**EP-A- 0 160 528**
**CH-A- 423 382**
**DE-A- 2 851 548**
**DE-A- 3 202 547**
**FR-A- 2 267 871**

(73) Titulaire: **TREFICABLE PIRELLI, 1, rue des Usines B.P. 13, F-94410 Saint Maurice(FR)**

(72) Inventeur: **Bataille, Claude, 55-61 rue de Fontenay, F-94130 Nogent sur Marne(FR)**

(74) Mandataire: **Lepeudry-Gautherat, Thérèse et al, ARMENGAUD JEUNE CABINET LEPEUDRY 6, rue du Fg. St-Honoré, F-75008 Paris(FR)**

ACTORUM AG

## Description

L'invention est relative à un manchon thermorétractable destiné à être appliqué sur un objet à recouvrir, délimité par une surface intérieure et une surface extérieure, et comprenant des moyens pour contrôler son chauffage uniforme.

Un des problèmes posés par l'application d'un manchon thermorétractable sur un objet est celui de l'apport de chaleur au manchon. en particulier dans le cas où le manchon est d'épaisseur importante, il est délicat de le chauffer de façon uniforme dans toute son épaisseur et sur toute sa longueur sans risquer de calciner localement le manchon, suite à une application de chaleur trop prononcée.

Afin de guider l'opérateur dans l'exécution du chauffage du manchon, il est connu de rapporter des marques en une matière colorée sur la surface extérieure du manchon, la couleur des marques se modifiant lorsque le manchon a atteint uns température prédéterminée et guidant par là-même l'opérateur.

De telles marques facilitent effectivement l'exécution du chauffage du manchon, en particulier lorsque celui-ci est d'épaisseur faible. Toutefois, lorsque le manchon est d'épaisseur importante, ces marques ne donnent pas toute satisfaction. En effet, ces marques étant disposées sur la surface extérieure du manchon, elles ne peuvent donne? uns indication précise de température que pour uns portion de manchon voisine de cette surface extérieure, tandis que la température d'une portion la plus intérieurs du manchon n'est pas déterminée précisément.

Le but de la présente invention est de proposer un manchon thermorétractable comportant des moyens pour contrôler précisément son chauffage uniforme dans toute l'épaisseur de celui-ci.

L'invention concerne à cet effet un manchon thermorétractable destiné à être appliqué sur un objet à recouvrir, et délimité par une surface intérieure et une surface extérieure, ledit manchon présentant à chaque extrémité des premières régions alternant périphériquement avec des secondes régions et entre lesquelles existe un gradient de contrainte. Ledit manchon, connu en soi de CH-A 423 382, se caractérise en ce qu'il est épais et lesdites première et seconde régions (10. 12) s'étendent dans l'épaisseur du manchon seulement au voisinage de ladite surface intérieure (3).

Avantageusement ladite contrainte est une contrainte d'expansion.

Selon une forme préférée de réalisation de l'invention, la surface intérieure présente en section transversale une forme polygonale et comprend des régions d'arête alternant avec des régions planes, ledit gradient de contrainte augmentant depuis les régions planes vers les régions d'arête.

L'invention concerne aussi un procédé de fabrication de ce manchon thermorétractable consistant à:

– réaliser un manchon en un matériau ou composé auquel on peut conférer la caractéristique thermorétractable, qui ne présente aucun gradient de contrainte;

– chauffer le manchon;

– expanser radialement le manchon chauffé;

– déformer le manchon de façon non régulière alors que celui-ci est chauffé pour produire ledit gradient de contrainte; et

– refroidir le manchon pour le maintenir à l'état expansé.

Un tel procédé décrit en soi par le document CH-A 423 382, se caractérise en ce que l'on déforme le manchon dans son épaisseur seulement au voisinage de sa surface intérieure.

Avantageusement, la surface intérieure du manchon présente en section transversale, avant expansion et déformation, une forme circulaire, et l'on déforme cette surface intérieure pour lui donner une forme polygonale. En outre, la déformation de la surface intérieure du manchon peut être faite en même temps que l'on expanse radialement celui-ci.

D'autres détails et avantages de l'invention apparaîtron au cours de la description qui suit, de la forme de réalisation préférée de l'invention, en regard des dessins annexés, sur lesquels:

les figures 1 et 2 sont deux vues de face d'un manchon, l'une avant expansion et l'autre pendant l'expansion;

les figures 3 et 4 sont deux vues du manchon expansé, l'une en perspective et l'autre de face;

la figure 5 est une vue de face du manchon, durant une phase intermédiaire de chauffage.

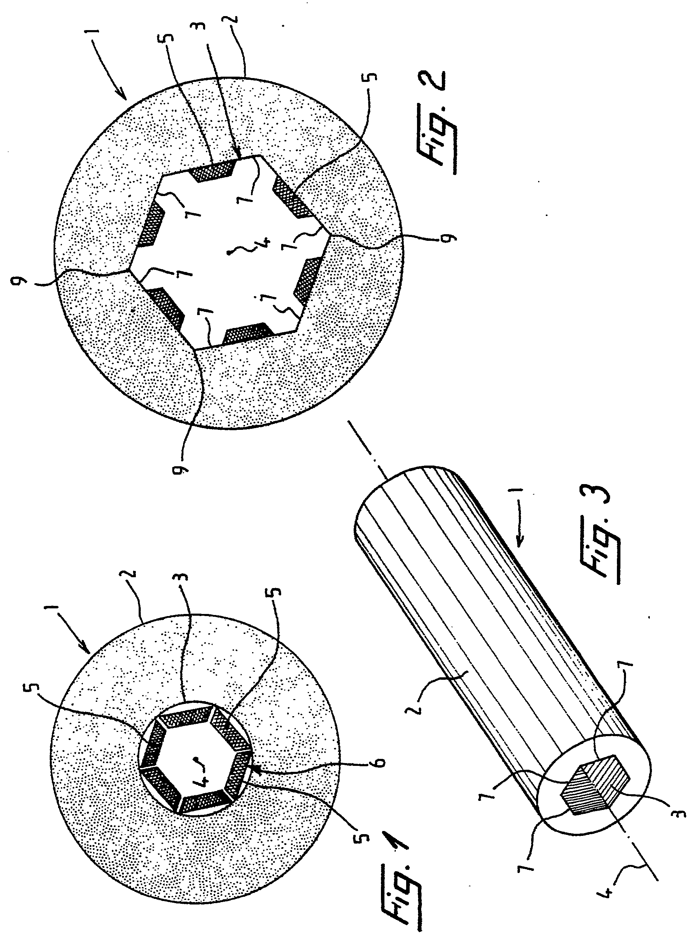

Le manchon 1 représenté sur la figure 1 est délimité par deux surfaces cylindriques circulaires présentant un axe commun 4, à savoir une surface extérieure 2 et une surface intérieure 3. Le manchon 1 est délimité axialement par deux plans perpendiculaires à l'axe 4.

Ce manchon est constitué d'un mélange intime d'un matériau élastomère et d'un matériau thermoplastique. Il est par exemple obtenu par moulage par extrusion.

Ce manchon est enfilé sur un mandrin d'expansion comprenant six doigts 5 - seuls ceux-ci étant représentés - s'étendant le long de l'axe 4 du manchon 1 et répartis autour de cet axe, chaque doigt présentant une surface plane 6 tournée vers la surface intérieure 3 du manchon et destinée à coopérer avec elle. Le mandrin comprend, de façon connue en soi, des moyens pour déplacer radialement et simultanément les six doigts 5.

On chauffe alors le manchon, en disposant par exemple celui-ci et le mandrin dans une étuve afin de provoquer la fusion du matériau thermoplastique réparti dans le manchon. Puis l'on expanse radialement le manchon en écartant les uns des autres les doigts 5 du mandrin, en mettant à profit la possibilité de déformation du matériau élastomère (figure 2).

A la fin de l'opération d'expansion du manchon, celui-ci est refroidi de sorte que le matériau thermoplastique se solidifie et empêche le matériau élastomère de reprendre sa forme initiale non expansée. Le manchon est ensuite retiré du mandrin et stocké.

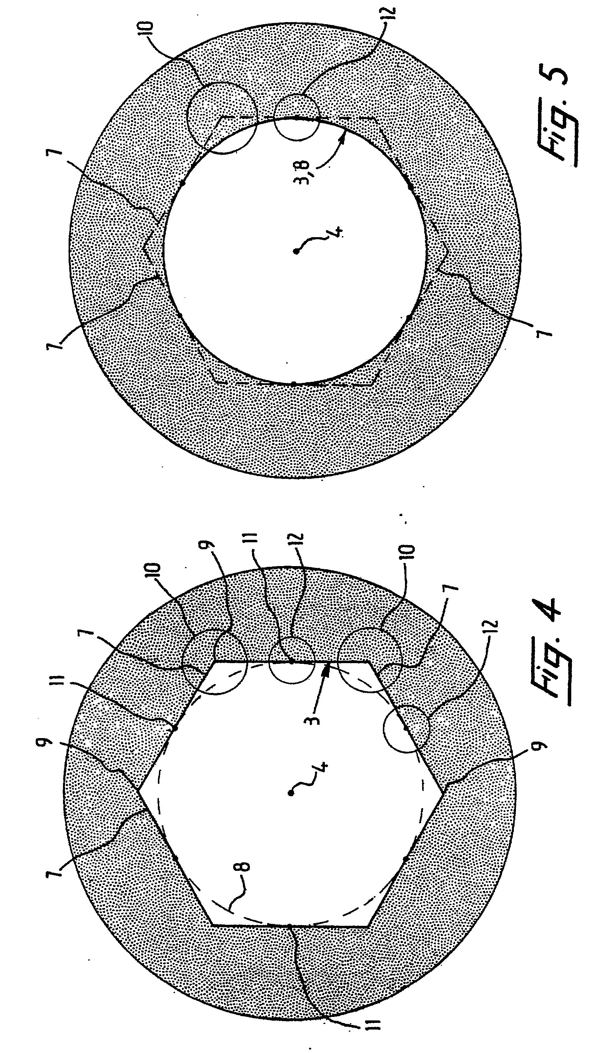

Le manchon ainsi expansé apparaît sur les figures 3 et 4. La surface extérieure 2 du manchon a augmenté en diamètre, et la surface intérieure 3 a été déformée de façon non régulière autour de l'axe 4 et présente six plats 7 s'étendant chacun selon l'axe 4 du manchon et répartis autour de celui-ci : la surface intérieure 3 présente donc, selon la vue de face de la figure 4, une forme hexagonale. Six arêtes 9 s'étendent parallèlement à l'axe 4 du manchon, chacune étant formée à la jonction entre deux plats adjacents.

On notera que la largeur obtenue de chaque plat est supérieure à la largeur de la surface plane 6 des doigts 5 du mandrin (figure 2) : autrement dit, il n'a pas été nécessaire de soutenie la surface intérieure du manchon dans chaque région d'arête 10 entre deux plats 7 adjacents pour provoquer son expansion.

Sur la figure 4 a été dessiné en pointillés un cercle 8 qui est tangent aux six plats 7 de la forme hexagonale en un point milieu 11 de ceux-ci, et dont le centre est situé sur l'axe 4 du manchon. Des régions 12 de tangence au cercle 8 peuvent ainsi être définies, qui constituent les régions planes précitées.

Les six arêtes 9 sont donc situées radialement à l'extérieur du cercle 8. Si l'on considère que, avant expansion, la surface intérieure 3 était circulaire, on comprendra que les régions d'arêtes 10 du manchon ont dû être expansées davantage que les régions de tangence 12, de façon à être repoussés radialement au-delà du cercle 8. Les régions d'arêtes 10 sont donc le siège de contraintes d'expansion du matériau élastomère plus fortes que les régions de tangence 12.

En utilisation, le manchon expansé est disposé sur un objet à recouvrir, par exemple une jonction entre deux câbles électriques, qui doit présenter un encombrement radial tel qu'il puisse être logé dans l'espace intérieur du manchon.

Dans le cas d'une jonction, le manchon est chauffé par un opérateur sur le site de pose des câbles, notamment au moyen d'un générateur à air chaud.

Une première phase de chauffage est destinée à porter le manchon à une température déterminée permettant sa rétraction ultérieure, cette température devant être uniforme à la fois dans l'épaisseur du manchon et dans sa longueur. A cet effet, alors que l'opérateur applique extérieurement le générateur à air chaud sur le manchon, il observe tour à tour les deux extrémités du manchon, lesquelles se présentent conformément à la figure 4.

La Demanderesse à observé au cours d'expérimentations que, au moment où le manchon atteint la température précitée, de façon uniforme dans toute son épaisseur, la forme de la surface intérieure 3 du manchon se modifie et passe, de la forme hexagonale de la figure 4, à une forme circulaire (figure 5) qui se confond avec le cercle 8 précité tangent aux plats 7 de la forme hexagonale.

Cette modification de forme résulte du relâchement des contraintes d'expansion dans les régions d'arête 10, relâchement qui se produit d'autant plus tôt lors de la montée en température du manchon que l'intensité des contraintes est importante. Ainsi, dans les régions de tangence 12 présentant des contraintes d'expansion plus faibles, aucun relâchement n'est encore observé. Par ailleurs, la rétraction du manchon dans son ensemble n'a pas encore commencé.

L'opérateur doit donc chercher à déclencher le passage de la forme hexagonale à la forme circulaire, et ce, aux deux extrémités du manchon. Dès que ce passage a été observé pour la première fois à une extrémité, l'opérateur cesse de chauffer cette extrémité pour concentrer la chaleur de son générateur à air chaud à l'autre extrémité afin d'y provoquer le passage de la forme hexagonale à la forme circulaire.

La Demanderesse a découvert que, lorsque le passage de la forme hexagonale à la forme circulaire a été observé aux deux extrémités du manchon, l'opérateur peut considérer que le manchon est à une température uniforme sur toute sa longueur.

Une seconde phase de chauffage du manchon est destinée à provoquer la rétraction de celui-ci, dans son ensemble, sur l'objet à recouvrir. Pour ce faire, l'opérateur déplace son générateur à air chaud le long du manchon jusqu'à la rétraction complète de celui-ci.

Etant donné que le manchon a été porté à une température uniforme durant la première phase de chauffage, l'opération de rétraction s'effectue d'autant plus rapidement car il ne subsiste plus de zones froides au sein du manchon . Par ailleurs les risques de calcination locale du manchon - dûs à un chauffage prolongé de certaines portions du manchon - sont minimisés - et ce, aussi bien lors de la première phase de chauffage que lors de la seconde.

L'invention trouve son intérêt dans le cas où l'épaisseur du manchon à poser est importante et rend donc difficile un chauffage uniforme de toute la masse du manchon.

En variante à la description ci-dessus, la surface intérieure 3 du manchon pourra présenter d'autres formes que la forme hexagonale, puis circulaire. L'essentiel est de ménager, sur la surface intérieure 3 et de préférence tout autour de l'axe 4 du manchon, des régions présentant des contraintes, avantageusement d'expansion plus fortes, et des régions présentant des contraintes, avantageusement d'expansion plus faibles. Par ailleurs, la modification de forme de la surface intérieure 5 du manchon lors du chauffage devra pouvoir être facilement repérée visuellement.

Bien que dans la description précédente, le manchon comporte une couche unique en un matériau thermorétractable, on peut envisager de prévoir d'autres couches présentant des propriétés physico-chimiques ou électriques différentes, notamment des couches qui sont disposées radialement à l'extérieur ou à l'intérieur par rapport à cette première couche, dans la mesure où ces autres couches n'entravent pas de façon significative la déformation à chaud de la couche thermorétractable première, ni la visualisation de cette déformation.

## Revendications

1. Manchon thermorétractable destiné à être appliqué sur un objet à recouvrir, et délimité par une surface intérieure (3) et une surface extérieure (2), ledit manchon présentant à chaque extrémité des premières régions (10) alternant périphériquement avec des secondes régions (12) et entre lesquelles existe un gradient de contrainte, caractérisé en ce que ledit manchon est épais et lesdites première et seconde régions (10, 12) s'étendent dans l'épaisseur du manchon seulement au voisinage de ladite surface intérieure (3).

2. Manchon selon la revendication 1, dans lequel ladite contrainte est une contrainte d'expansion.

3. Manchon selon la revendication 2, dans lequel la surface intérieure (3) présente en section transversale une forme polygonale, et comprend des régions d'arête (10) alternant avec des régions planes (12), ledit gradient de contrainte augmentant depuis les régions planes vers les régions d'arête.

4. Manchon selon la revendication 3, qui comprend une couche thermorétractable en elle-même dans laquelle s'étend ladite forme polygonale.

5. Procédé de fabrication d'un manchon thermorétractable selon l'une quelconque des revendications précédentes, consistant à:
- réaliser un manchon en un matériau ou composé auquel on peut conférer la caractéristique thermorétractable, qui ne présente aucun gradient de contrainte;
- chauffer le manchon;
- expanser radialement le manchon chauffé;
- déformer le manchon de façon non régulière alors que celui-ci est chauffé pour produire ledit gradient de contrainte; et
- refroidir le manchon pour le maintenir à l'état expansé;
caractérisé en ce que l'on déforme le manchon dans son épaisseur seulement au voisinage de sa surface intérieure (3).

6. Procédé selon la revendication 5, dans lequel la surface intérieure (3) du manchon présente en section transversale, avant expansion et déformation, une forme circulaire, et l'on déforme cette surface intérieure pour lui donner une forme polygonale.

7. Procédé selon la revendication 5 ou 6, dans lequel on déforme la surface intérieure du manchon en même temps qu'on expanse radialement celui-ci.

## Patentansprüche

1. Wärmeschrumpfbare Hülse passend zur Aufbringung auf ein zu umhüllendes Objekt, die begrenzt ist durch eine innere Oberfläche (3) und eine äussere Oberfläche (2) und an jedem Ende erste Abschnitte (10) im umfangsmässigen Wechsel mit zweiten Abschnitten (12) aufweist, zwischen denen ein Spannungsgefälle besteht, dadurch gekennzeichnet, dass die Hülse eine grosse Dicke hat und dass diese ersten und zweiten Abschnitt (10, 12) über die Dicke der Hülse hinweg nur in der Nähe der inneren Oberfläche (3) verlaufen.

2. Hülse gemäss Anspruch 1, dadurch gekennzeichnet, dass es sich bei der Spannung um eine Dehnungsspannung handelt.

3. Hülse gemäss Anspruch 2, dadurch gekennzeichnet, dass die innere Oberfläche (3) eine vieleckige Querschnittsform sowie Kantenbereiche (10) im Wechsel mit ebenen Abschnitten (12) aufweist, wobei das Spannungsgefälle von den ebenen Abschnitten zu den Kantenbereichen hin zunimmt.

4. Hülse gemäss Anspruch 3, gekennzeichnet durch eine als solche wärmeschrumpfbare Schicht, welche die Vieleckform beinhaltet.

5. Verfahren zur Herstellung einer wärmeschrumpfbaren Hülse gemäss den vorstehenden Ansprüchen mit den folgenden Verfahrensschritten:
- Ausbildung einer Hülse aus einem Material bzw. einer Verbindung von wärmeschrumpfbarer Beschaffenheit, das keinerlei Spannungsgefälle aufweist,
- Erwärmung der Hülse,
- radiales Expandieren der erwärmten Hülse,
- unregelmässiges Verformen der Hülse während ihrer Erwärmung zur Herstellung des Spannungsgefälles, und
- Abkühlung der Hülse zur Aufrechterhaltung des expandierten Zustandes,
dadurch gekennzeichnet, dass die Verformung der Hülse über ihre Dicke hinweg nur in der Nähe ihrer inneren Oberfläche (3) erfolgt.

6. Verfahren gemäss Anspruch 5, dadurch gekennzeichnet, dass die innere Oberfläche (3) der Hülse vor der Expandierung und Verformung eine kreisrunde Querschnittsform aufweist, und dass diese innere Oberfläche einer Verformung unterzogen wird, um ihr eine Vieleckform zu verleihen.

7. Verfahren gemäss Anspruch 5 oder 6, dadurch gekennzeichnet, dass die Verformung der inneren Hülsenoberfläche gleichzeitig mit ihrer radialen Expandierung erfolgt.

## Claims

1. A heat-shrinkable sleeve intended to be applied to an object to be covered, and delimited by an inner surface (3) and an outer surface (2), the said sleeve having at each end first regions (10) alternating peripherally with second regions (12) and between which there exists a stress gradient, characterized in that the said sleeve is thick and the said first and second regions (10, 12) extend in the thickness of the sleeve only in the vicinity of the said inner surface (3).

2. A sleeve according to claim 1, in which the said stress is an expansion stress.

3. A sleeve according to claim 2, in which the inner surface (3) has, in cross-section, a polygonal shape and comprises edge regions (10) alternating with plane regions (12), the said stress gradient increasing from the plane regions towards the edge regions.

4. A sleeve according to claim 3, which comprises a layer, heat-shrinkable in itself, in which the said polygonal shape extends.

5. A process for the manufacture of a heat-shrinkable sleeve according to any of the preceding claims, consisting in:
- producing a sleeve of a material or compound which can be endowed with heat-shrinkable characteristics and which has no stress gradient;
- heating the sleeve;
- expanding the heated sleeve radially;
- deforming the sleeve in a non-regular manner when the latter is heated, to produce the said stress gradient; and
- cooling the sleeve to keep it in the expanded condition;
characterized in that the sleeve is deformed in its thickness only in the vicinity of its inner surface (3).

6. A process according to claim 5, in which the inner surface (3) of the sleeve has, in cross-section, before expansion and deformation, a circular shape, and this inner surface is deformed to give it a polygonal shape.

7. A process according to claim 5 or 6, in which the inner surface of the sleeve is deformed at the same time as the latter is expanded radially.

_Fig. 1_

_Fig. 2_

_Fig. 3_

EP 0 253 721 B1

_Fig. 4_

_Fig. 5_

EP 0 253 721 B1